Europäisches Patentamt

European Patent Office

Office européen des brevets

(19)

(11) Numéro de publication: **0 393 189**
**A1**

(12)

# DEMANDE DE BREVET EUROPEEN
## PUBLI E EN APPLICATION DE
### L'article 158, paragraphe 3 de la CBE

(21) Numéro de dépôt: 89900370.1

(22) Date de dépôt: 23.09.88

(86) Numéro de dépôt internationale :
PCT/SU88/00185

(87) Numéro de publication internationale :
WO 90/03343 (05.04.90 90/08)

(51) Int. Cl.⁵: **C04B 7/36**

---

(43) Date de publication de la demande:
**24.10.90 Bulletin 90/43**

(84) Etats contractants désignés:
**DE FR IT NL SE**

(71) Demandeur: **KAZAKHSKY KHIMIKO-TEKHNOLOGICHESKY INSTITUT Kommunistichesky pr. 5 Chimkent, 486018(SU)**

(72) Inventeur: **LERKE, Pavel Pavlovich ul. Lugovaya, 4 Chimkent, 486009(SU)**
Inventeur: **TEREKHOVICH, Stanislav Vikentievich ul. Dostoevskogo, 17 Chimkent, 486011(SU)**
Inventeur: **ALDIYAROV, Bakhyt Dzhumadillaevich ul. Patrisa Lumumby, 101a Chimkent, 486009(SU)**
Inventeur: **SHNAIDER, Valery Vasilievich mikroraion 17, 20-58 Chimkent, 486035(SU)**
Inventeur: **KURNIKOV, Pavel Borisovich ul. Silikatnaya, 7-505 Moskovskaya obl. Podolsk, 142111(SU)**

(74) Mandataire: **Durand, Yves Armand Louis et al Cabinet Z. Weinstein 20, Avenue de Friedland F-75008 Paris(FR)**

---

(54) **PROCEDE DE PRODUCTION DE BRIQUE RECUITE EN CIMENT DE PORTLAND.**

(57) Un procédé de production de ciment de brique de portland consiste à calciner, à une température comprise entre 1350 et 1450°C et dans une atmosphère gazeuse de réduction contenant plus de 80% en poids de monoxyde de carbone, un mélange de matière brute comprenant 59,70 à 67,05% en poids

de calcaire, 32,83 à 39,07% de laitier phosphoreux, 1,07 à 6,21 % de mélanges ne contenant pas plus de 40 % d'oxyde de fer. La brique en ciment de portland obtenue pendant la calcination est soumise à un refroidissement forcé. Du ciment ainsi produit présente une résistance supérieure et empêche le gonflement de surfaces ouvertes d'articles fraîchement coulés pendant leur traitement thermique.

- 1 -

"Procédé d'obtention du clinker de ciment portland"

Domaine de l'invention

La présente invention concerne la production de liants et a notamment pour objet un procédé d'obtention du clinker de ciment portland.

Niveau de technique

Actuellement on utilise en tant que matière de départ pour la fabrication du clinker de ciment portland un mélange finement broyé et homogénéisé de calcaire (55 à 60 % en masse) et de laitier phosphorique (40 à 45 % en masse). La proportion des composants de ce mélange de départ est déterminée à partir du facteur de saturation (FS) du clinker :

$$FS = \frac{CaO(\%) - 1,65\ Al_2O_3(\%) - 0,35\ FeSO_4(\%)}{2,8\ SiO_2(\%)}$$

soit à partir du degré de saturation de SiO2 jusqu'à $3CaO.SiO_2$.

Le mélange brut préparé est soumis à cuisson à une température de 1350 à 1450°C jusqu'à ce que l'oxyde de calcium soit complètement lié aux minéraux du clinker de ciment portland. Le clinker de ciment portland ainsi obtenu est ensuite soumis à un refroidissement forcé à l'air ou dans l'eau (SU, A, 507537, 299475).

Toutefois le clinker obtenu contient de l'oxyde de phosphore (pentoxyde de phosphore $P_2O_5$) sous forme de solution solide dans les minéraux du clinker, ce qui augmente le temps de prise du ciment et en diminue la

- 2 -

résistance à la compression (15 à 20 MPa) pendant la période initiale de durcissement. Cela provoque le gonflement et l'écaillement des surfaces à découvert des éléments fraîchement moulés pendant leur étuvage.

On connaît également un procédé d'obtention du clinker de ciment protland par la cuisson d'un mélange brut broyé et homogénéisé contenant du calcaire, du laitier phosphorique et un composant à alumosilicate (SU, A, 876580).

Ce procédé permet de diminuer partiellement le gonflement et l'écaillement des éléments fraîchement moulés pendant leur étuvage et d'en augmenter la résistance jusqu'à 23 MPa pendant les trois premiers jours.

On connaît un procédé d'obtention du clinker de ciment portland par la cuisson sous atmosphère faiblement oxydante à une température de 1450°C d'un mélange brut composé du calcaire, du laitier phosphorique et des résidus de cuisson de pyrites et dont la composition est la suivante, % en masse :

|  |  |
|---|---|
| calcaire | 53 à 58,7 |
| laitier phosphorique | 36 à 44 |
| résidus de pyrites | 2,1 à 6,6 |

(S.A.Slobodchikova, "Issledovanie vozmozhnosti poluchenia vysokokachestvennogo klinkera iz fosforsoderzhaschikh shlakov", thèse à l'Institut de recherches scientifiques du ciment, 1964).

L'inconvénient de ce procédé réside dans la faible résistance mécanique du ciment après l'étuvage (10 à 20 MPa) et dans les processus destructifs qui se

- 3 -

traduisent par le gonflement et l'écaillement des surfaces à découvert après l'étuvage des éléments fraîchement moulés.

Exposé de l'invention

Dans le cadre de l'invention on s'est proposé de créer, grâce aux conditions favorisant la formation de phosphures de fer ne formant pas de solutions solides avec les minéraux de clinker, un procédé d'obtention du clinker de ciment portland permettant d'augmenter la résistance mécanique du ciment et d'éviter le gonflement des surfaces à découvert des éléments fraîchement moulés à partir de ce ciment pendant leur traitement par le chauffage dans la vapeur.

Ce problème est résolu grâce à un procédé d'obtention du clinker de ciment portland consistant à préparer un mélange brut à base du calcaire et du laitier phosphorique et à le soumettre à cuisson à une température de 1350 à 1450°C jusqu'à ce l'oxyde de calcium soit lié aux minéraux du clinker de ciment portland, puis au refroidissement forcé du clinker obtenu, dans lequel, selon l'invention, on soumet à cuisson un mélange brut contenant 59,7 à 65,05 % en masse de calcaire, 32,83 à 39,07 % en masse de laitier phosphorique et 1,07 à 6,21 % en poids d'adjuvants contenant plus de 40 % en masse d'oxyde de fer et l'on effectue la cuisson de ce mélange brut sous une atmosphère réductrice contenant plus de 80 % en poids d'oxyde de carbone.

Grâce à la présente invention la résistance mécanique après étuvage du ciment phosphoré obtenu à partir du clinker selon l'invention augmente en passant de 10,0-20,0 MPa à 28-38 MPa. En outre, il n'y a pas de

- 4 -

gonflement ni d'écaillement des surfaces des éléments fraîchement moulés de ce ciment.

La meilleure variante de réalisation de l'invention

L'invention sera mieux comprise à la lecture de la description détaillée du procédé d'obtention du clinker de ciment portland et des exemples de réalisation du procédé qui vont suivre.

Le clinker de ciment portland selon l'invention est obtenu à partir d'un composant contenant la chaux (calcaire), du laitier phosphorique et des adjuvants contenant plus de 40 % en poids d'oxyde de fer.

Le calcaire est une roche compacte se composant de la calcite et d'oxydes de silicium, de magnésium, d'aluminium et de fer. La composition chimique du calcaire pouvant être utilisé conformément à la présente invention peut être la suivante : oxyde de silicium : 0 à 5 parties en masse, oxyde d'aluminium : 0 à 2 parties en masse, oxyde de fer : 0 à 2 parties en masse, oxyde de calcium : 50 à 55 parties en masse. Les pertes de calcination ($CO_2$) sont de 36 à 42 parties en masse.

Le laitier phosphorique utilisé en tant que composant de départ contenant de la silice est un sous-produit de la fabrication électrothermique du phosphore jaune.

La composition chimique du laitier phosphorique est normalement la suivante : 38 à 45 % en masse d'oxyde de silicium, 2 à 5 % en masse d'oxyde d'aluminium, 0,1 à 0,5 % en masse d'oxyde de fer, 38 à 52 % en masse d'oxyde de calcium, 2 à 5 % en masse d'oxyde de magnésium, 0,5 à 3,0 % en masse d'oxyde de phosphore, 1 à 3 % en masse de fluor, 0,1 à 0,3 % en masse d'oxyde de

- 5 -

manganèse.

Au point de vue de la constitution minéralogique, le laitier phosphorique se compose de 80 à 85 % en masse de phase vitreuse de composition wollastonitique et de 7 à 10 % en poids de wollastonite, de 5 à 7 % en poids de mélilite, de 3 à 5 % en masse d'okermanite et de 2 à 3 % en masse de phosphures de fer et de manganèse. A l'état cristallisé, le laitier phosphorique se compose de 60 à 70 % en masse de wollastonite, de 20 à 30 % en masse de mélilite, de 10 à 15 % en masse d'okermanite et de 10 à 20 % en masse de cuspidine.

En tant qu'adjuvant contenant du fer on utilise les résidus de la cuisson oxydante de la pyrite ($FeS_2$) obtenus au cours de la fabrication de l'acide sulfurique et des laitiers se formant au cours de la fabrication des métaux non ferreux : du plomb, du zinc, du cuivre.

La composition chimique des résidus de pyrite est la suivante : 7,2 % en masse d'oxyde de silicium, 2,9 % en masse d'oxyde d'aluminium, 72,6 % en masse d'oxyde de fer, 5,63 % en masse d'oxyde de calcium, 4,66 % en masse de trioxyde de soufre. Du point de vue de la constitution minéralogique les résidus de pyrite se composent de 70 à 76 % en masse d'hématite et de 24 à 30 % en masse de verre à base d'alumino-ferrosilicates de calcium faiblement basiques.

En tant que résidus de pyrite on peut utiliser n'importe quels résidus industriels d'une teneur en $Fe_2O_3$ d'au moins 40 %. Si la teneur en oxyde de fer de l'adjuvant contenant du fer est inférieure à 40 %, il se produit des processus destructifs au cours de l'étuvage des éléments en ciment et la capacité réactionnelle du mélange brut diminue par suite de la diminution de la part du laitier phosphorique dans la composition de ce mélange.

Les laitiers de la métallurgie de métaux non ferreux sont des résidus de la fabrication du plomb, du zinc et du cuivre. La composition chimique des laitiers de la fabrication des métaux non ferreux est le plus souvent la suivante : 21 à 28 % en masse d'oxyde de silicium, 12 à 22 % en masse d'oxyde d'aluminium, 40 à 60 % en masse d'oxyde de fer, 5 à 10 % en masse d'oxyde de calcium, 4 à 20 % en masse d'oxyde de magnésium.

Le composant contenant la chaux, le laitier phosphorique et les adjuvants ferreux doivent être finement broyés. Pour le broyage des composants ci-dessus on utilise normalement des dispositifs de mouture connus, par exemple des broyeurs à boulets ou à projection.

Le taux de réduction des composants ci-dessus spécifiés du mélange brut est contrôlé d'après les résidus de criblage de 10 à 18 % pour les mailles de tamis de 80 $\mu$m et de 1 à 3 % pour les mailles de tamis de 200 $\mu$m.

Le broyage des composants de départ peut se faire par un procédé humide ou un procédé sec. Dans les procédés humides de broyage la mouture des composants s'effectue en présence d'eau, puis le mélange brut est homogénéisé et stocké sous forme de suspension (de boue) d'une humidité de 28 à 35 %.

En cas d'utilisation d'un procédé sec de broyage des composants la mouture s'effectue sans addition d'eau. L'homogénéisation des composants est alors plus difficile.

- 7 -

Le procédé d'obtention du clinker de ciment portland selon l'invention consiste à soumettre les composants de départ spécifiés à cuisson à une température de 1350 à 1450°C. Le mélange brut préparé et soumis à la cuisson contient 59,70 à 65,05 % en masse de calcaire, 32,83 à 39,07 % en masse de laitier phosphorique et 1,07 à 6,21 % en masse d'adjuvants contenant plus de 40 % en masse d'oxyde de fer.

Si la teneur du mélange brut en calcaire est plus faible que spécifié, on est obligé, en conséquence, d'augmenter la teneur en laitier phosphorique par rapport à la valeur préconisée de 32,83 à 39,07 % en masse, ce qui conduit à une diminution de la résistance mécanique.

Lorsque la teneur en calcaire est supérieure à 65,05 % en masse et que, par conséquent, la teneur en laitier phosphorique est inférieure à 32,83 % en masse, la résistance mécanique du produit fini diminue également, alors que le procédé d'obtention du clinker devient plus coûteux.

Lorsque la teneur du mélange brut en adjuvant ferreux dépasse 6,21 % en masse, la consommation de combustion pour la cuisson augmente.

Si la teneur en adjuvants ferreux est inférieure à 1,07 % en masse, il se produit le gonflement et l'écaillement des éléments en ciment après étuvage du fait de la quantité insuffisante de fer réduit qui se forme laquelle se lie au phosphore réduit en phosphure de fer.

Selon l'invention, la cuisson du mélange brut préconisé est effectuée sous une atmosphère réductrice contenant plus de 80 % en masse d'oxyde de carbone et à une

- 8 -

température de 1350 à 1450°C. Pendant la cuisson du mélange brut l'oxyde de calcium est lié aux minéraux du clinker de ciment portland.

Comme il a été déjà signalé, la température de cuisson des composants de départ doit être d'au moins 1350°C. Sinon la teneur du clinker obtenu en oxyde de calcium chimiquement non lié augmente, ce qui diminue la résistance mécanique du ciment.

Une température de cuisson supérieure à 1450°C conduit à une consommation excessive de combustible. La diminution de la teneur en monoxyde de carbone du milieu gazeux (moins de 20 %) conduit alors à l'oxydation des phosphures de fer et de manganèse et à la formation du pentoxyde de phosphore qui s'intègre au réseau cristallin des minéraux du clinker et forme au cours de l'hydratation du ciment une enveloppe gélifiée de phosphate de calcium autour des particules du ciment, en bloquant ainsi la pénétration de l'eau dans ces particules, ce qui interrompt le durcissement du ciment.

Après avoir cuit le mélange brut dans les conditions ci-dessus spécifiées, on soumet le clinker obtenu à refroidissement forcé par un courant d'air ou dans l'eau. En cas de refroidissement forcé par courant d'air on obtient le clinker gris de ciment portland qui s'emploie le plus souvent pour la préfabrication des éléments en béton armé, en tant que ciment à faible chaleur d'hydratation et résistant à l'action des sulfates dans la construction des ouvrages hydrauliques, pour la cimentation des forages de production de gaz ou de pétrole et pour la fabrication des éléments en amiante ciment.

- 9 -

L'air de refroidissement du clinker s'échauffe à une température de 500 à 600°C et est utilisé pour la combustion du combustible, ce qui en diminue la consommation.

Grâce à l'invention il devient possible d'obtenir un clinker de ciment portland aux caractéristiques universelles du point de vue de la technique de construction. Le clinker de ciment portland ainsi obtenu contient 5 à 7 % en masse de phase intermédiaire représentée par les aluminates de calcium. La phase aluminate est représentée non seulement par l'aluminate tricalcique ($3CaO.Al_2O_3$), mais aussi par la phase aluminatée halogénée $11CaO.7Al_2O_3.CaF_2$ qui est hydrauliquement plus active.

La teneur élevée en alite (80 à 90 % en masse) du clinker obtenu par le procédé selon l'invention et le fait qu'il contient, comme il a été signalé, une phase aluminatée hydrauliquement plus active permettent d'augmenter la résistance mécanique du ciment de 3,5-5,0 MPa.

On trouve ci-après des exemples non limitatifs de réalisation du procédé selon l'invention.

Exemple 1

59,1 kg de calcaire, 39,07 kg de laitier phosphorique et 39,07 kg de résidus de pyrite d'une teneur en $Fe_2O_3$ de 79,6 % en masse sont moulus à un taux de réduction caractérisé par des résidus de criblage de 10 à 20 % pour des mailles de 80 $\mu$m et de 2 % pour des mailles de 200 $\mu$m et l'on en prépare un mélange brut homogénéisé.

Le mélange brut préparé est chargé dans un four pour le

- 10 -

soumettre à la cuisson sous atmosphère réductrice
contenant 80 % en masse d'oxyde de carbone, à une
température de 1300 à 1350°C. Pendant la cuisson l'oxyde
de calcium se formant par la décomposition du calcaire
est complètement lié en minéraux du clinker : alite,
bélite et aluminates de calcium.

Après être refroidi par courant d'air, le produit obtenu
(le clinker de ciment portland) est moulu pour obtenir
le ciment portland. La mouture s'effectue en présence de
3 à 5 % en masse de gypse.

Le ciment portland obtenu est utilisé pour mouler des
éprouvettes de 4x4x16 cm à partir d'un mortier de
consistance plastique au rapport pondéral ciment-sable
de 1:3 et au rapport eau-ciment de 0,4. Après deux
heures de maintien les éprouvettes moulées sont soumises
à l'étuvage.

Les examens des éprouvettes montrent que les processus
destructifs se traduisant par l'écaillement et le
gonflement des surfaces à découvert sont inexistants.
Des essais de résistance mécanique des éprouvettes
obtenues ont été faits après l'étuvage selon le régime
suivant : deux heures de maintien des éléments
fraîchement moulés avant l'étuvage, trois heures de
chauffage à 80-95°C, six heures de maintien isothermique
à une température de 80 à 95°C et trois heures de
refroidissement à la température du local. La résistance
à la compression est de 28,0 MPa.

Exemple 2

Le mélange brut contenant 65,05 kg de calcaire, 32,83 kg
de laitier phosphorique et 2,12 kg de résidus de pyrite
à teneur en $Fe_2O_3$ de 79,6 % en masse est préparé à la

- 11 -

cuisson de la manière suivante.

Tous les composants du mélange brut sont broyés et soigneusement mélangés. Le taux de réduction est contrôlé d'après le refus de criblage de 10 à 20 % sur le tamis à mailles de 80 $\mu$m et de 1 à 3 % sur le tamis à mailles de 200 $\mu$m.

Le mélange brut ainsi préparé est soumis à cuisson à une température de 1400 à 1450°C sous atmosphère réductrice contenant 90 % en masse d'oxyde de carbone.

Le clinker de ciment portland obtenu dans le four après la cuisson est soumis à un refroidissement forcé par l'eau.

Le ciment portland obtenu à partir de ce clinker se caractérise par l'absence de processus destructifs après l'étuvage qui se traduisent ordinairement par le gonflement et l'écaillement des surfaces à découvert.

La résistance à la flexion du ciment obtenu établie au cours des essais des éprouvettes fabriquées à partir d'un mortier de consistance plastique à rapport eau-ciment de 0,4 est de 38 MPa après deux jours de durcissement à l'air et à la vapeur.

Exemple 3

Le mélange brut contenant 64,31 kg de calcaire, 34,62 kg de laitier phosphorique et 1,07 kg de résidus de pyrite d'une teneur en oxyde de fer de 79,6 % en masse est préparé à la cuisson de la manière suivante.

Tous les composants ci-dessus du mélange brut sont broyés et soigneusement mélangés.

- 12 -

Le taux de réduction des composants est contrôlé d'après le refus de criblage de 10 à 20 % sur le tamis à mailles de 80 $\mu$m et de 1 à 3 % sur le tamis à mailles de 200 $\mu$m.

Le mélange brut ainsi préparé est soumis à la cuisson à une température de 1400 à 1450°C sous une atmosphère réductrice contenant 82 % en masse d'oxyde de carbone.

Le clinker de ciment portland se formant au four pendant la cuisson est soumis à un refroidissement forcé à l'eau.

Le ciment portland obtenu à partir de ce clinker se caractérise par l'absence de phénomènes destructifs après l'étuvage des éléments fraîchement formés, ces phénomènes se traduisant par le gonflement et l'écaillement des surfaces à dévouvert.

La résistance à la flexion des éprouvettes du ciment obtenu moulées à partir d'un mortier de consistance plastique à rapport eau-ciment de 0,4 est de 30,5 MPa après deux jours de durcissement à l'air et à la vapeur.

Exemple 4

Le mélange brut contenant 60,02 kg de calcaire, 33,77 kg de laitier phosphorique et 6,21 kg de laitier se formant lors de la séparation du plomb de ses minerais et contenant 46 % en masse d'oxyde de fer est préparé et soumis à la cuisson comme dans l'exemple 3, sauf que la cuisson est effectuée sous une atmosphère contenant 80 % en masse d'oxyde de carbone.

Le ciment portland obtenu du clinker se formant après la cuisson et le refroidissement forcé se caractérise par

- 13 -

l'absence de phénomènes destructifs après l'étuvage des éléments fraîchement moulés.

La résistance à la flexion des éprouvettes du ciment ainsi obtenu moulées à partir d'un mortier de consistance plastique à rapport eau-ciment de 0,4 est de 32,5 MPa après deux jours de durcissement à l'air et à la vapeur.

Exemple 5

Le mélange brut contenant 64,23 kg de calcaire, 30,14 kg de laitier phosphorique et 5,63 kg de laitiers à base de plomb contenant 46 % en masse d'oxyde de fer est préparé et soumis à la cuisson comme dans l'exemple 3.

Le ciment portland obtenu du clinker se formant après la cuisson et le refroidissement forcé se caractérise par l'absence de phénomènes destructifs après l'étuvage des éléments fraîchement moulés.

La résistance à la flexion des éprouvettes du ciment obtenu moulées à partir d'un mortier de consistance plastique à rapport eau-ciment de 0,4 est de 45 MPa après deux jours de durcissement à l'air et à la vapeur.

Application industrielle

L'invention peut être utilisée dans la fabrication du ciment aux caractéristiques universelles du point de vue de la technique de construction, et notamment d'un ciment résistant à l'action des sulfates et à faible chaleur d'hydratation utilisé dans la construction des ouvrages hydrauliques (canaux, barrages) ; du ciment de tamponnage pour les sondages chauds ou froids ; du

- 14 -

ciment portland de haute résistance utilisé dans les
structures portantes en béton armé.

- 15 -

Revendication

Procédé d'obtention du clinker de ciment portland consistant à préparer un mélange brut à base de calcaire et de laitier phosphorique et à le soumettre à cuisson à une température de 1350 à 1450°C jusqu'à ce que l'oxyde de calcium soit lié aux minéraux du clinker de ciment portland, puis à soumettre le clinker obtenu à un refroidissement forcé, caractérisé en ce que le mélange brut soumis à la cuisson contient 59,7 à 65,05 % en masse de calcaire, 39,07 à 32,83 % en masse de laitier phosphorique et 1,07 à 6,21 % en masse d'adjuvants contenant au moins 40 % en masse d'oxyde de fer et que la cuisson de ce mélange brut est effectuée sous une atmosphère réductrice contenant plus de 80 % en masse d'oxyde de carbone.

- 16 -

Revendication modifiée de la demande internationale
PCT/SU 88/00185

Procédé d'obtention du clinker de ciment portland
consistant à préparer un mélange brut à base de calcaire
et de laitier phosphorique et à le soumettre à cuisson à
une température de 1350 à 1450°C jusqu'à ce que l'oxyde
de calcium soit lié aux minéraux du clinker de ciment
portland, puis à soumettre le clinker obtenu au
refroidissement forcé, caractérisé en ce que le mélange
brut soumis à la cuisson contient 59,7 à 65,05 % en
masse de calcaire, 32,83 à 39,07 % en masse de laitier
phosphorique et 1,07 à 6,21 % en masse d'adjuvants
contenant au moins 40 % en masse d'oxyde de fer et que
la cuisson de ce mélange brut est effectuée sous une
atmosphère réductrice contenant plus de 80 % en masse
d'oxyde de carbone.

# RAPPORT DE RECHERCHE INTERNATIONALE

Demande internationale N° PCT/SU 88/00185

## I. CLASSEMENT DE L'INVENTION (si plusieurs symboles de classification sont applicables, les indiquer tous) [7]

Selon la classification internationale des brevets (CIB) ou à la fois selon la classification nationale et la CIB

$$CIB^4 - C \ 04 \ B \ 7/36$$

## II. DOMAINES SUR LESQUELS LA RECHERCHE A PORTÉ

### Documentation minimale consultée [8]

| Système de classification | Symboles de classification |
|---|---|
| $CIB^4$ | C 04 B 7/02, 7/14, 7/36, 7/44 |

Documentation consultée autre que la documentation minimale dans la mesure
où de tels documents font partie des domaines sur lesquels la recherche a porté [9]

## III. DOCUMENTS CONSIDÉRÉS COMME PERTINENTS [10]

| Catégorie [*] | Identification des documents cités, [11] avec indication, si nécessaire, des passages pertinents [12] | N° des revendications visées [13] |
|---|---|---|
| Y | SU, A1, 876580 (KAZAKHSKY KHIMIKO-TEKHNOLO-GICHESKY INSTITUT), le 30 octobre 1981 (30.10.81) | 1 |
| A | SU, A1, 175419 (I.F.Ponomarev et autres), le 17 novembre 1965 (17.11.85), voir les revendications | 1 |
| A | SU, A1, 299475 (KHMIKO-METALLURGICHESKY INSTITUT AN KAZAKHSKOI SSR), le 24 mai 1971 (24.05.71) | 1 |
| A | SU, A1, 567697 (VSESOJUZNY GOSUDARSTVENNY NAUCHNO-ISSLEDOVATELSKY INSTITUT TSEMENTNOI PROMYSHLENNOSTI), le 24 août 1977 (24.08.77) | 1 |
| A | FR, A1, 2182810 (EERSTE NEDERLANDSE CEMENT INDUSTRIE (ENCI) N.V. et autres), le 4 décembre 1973 (14.12.73), voir les revendications | 1 |

[*] Catégories spéciales de documents cités: [11]

« A » document définissant l'état général de la technique, non considéré comme particulièrement pertinent

« E » document antérieur, mais publié à la date de dépôt international ou après cette date

« L » document pouvant jeter un doute sur une revendication de priorité ou cité pour déterminer la date de publication d'une autre citation ou pour une raison spéciale (telle qu'indiquée)

« O » document se référant à une divulgation orale, à un usage, à une exposition ou tous autres moyens

« P » document publié avant la date de dépôt international, mais postérieurement à la date de priorité revendiquée

« T » document ultérieur publié postérieurement à la date de dépôt international ou à la date de priorité et n'appartenant pas à l'état de la technique pertinent, mais cité pour comprendre le principe ou la théorie constituant la base de l'invention

« X » document particulièrement pertinent: l'invention revendiquée ne peut être considérée comme nouvelle ou comme impliquant une activité inventive

« Y » document particulièrement pertinent; l'invention revendiquée ne peut être considérée comme impliquant une activité inventive lorsque le document est associé à un ou plusieurs autres documents de même nature, cette combinaison étant évidente pour une personne du métier.

« & » document qui fait partie de la même famille de brevets

## IV. CERTIFICATION

| Date à laquelle la recherche internationale a été effectivement achevée | Date d'expédition du présent rapport de recherche internationale |
|---|---|
| le 11 mai 1989 (11.05.89) | le 12 juin 1989 (12.06.89) |
| Administration chargée de la recherche internationale ISA/SU | Signature du fonctionnaire autorisé N.Shepelev |

Formulaire PCT/ISA/210 (deuxième feuille) (Janvier 1985)

Voir notes sur les feuilles d'accompagnement